# EUROPÄISCHE PATENTSCHRIFT

(11) **EP 0 742 470 B1**
(45) Veröffentlichungstag und Bekanntmachung des Hinweises auf die Patenterteilung: **31.03.1999**
(21) Anmeldenummer: 96201315.7
(22) Anmeldetag: 26.04.1996
(51) Int. Cl.: G02F 1/1335

(54) **Vorrichtung zum mehrfarbigen Ausleuchten**
Multicolour illumination apparatus
Dispositif d'éclairage multicolore

(30) Priorität: 05.05.1995 DE 19516488
(43) Veröffentlichungstag der Anmeldung: 13.11.1996
(73) Patentinhaber: Valeo Electronics Verwaltung GmbH, 75189 Remchingen (DE)
(72) Erfinder: Arheit, Thomas, 76356 Weingarten (DE)
(74) Vertreter: COHAUSZ HANNIG DAWIDOWICZ & PARTNER

(56) Entgegenhaltungen:
- WO-A-88/01399
- WO-A-88/03663
- DE-A- 2 820 113
- US-A- 4 843 527
- PATENT ABSTRACTS OF JAPAN vol. 015, no. 462 (P-1279), 22.November 1991 & JP-A-03 196088 (RIYOOSAN:KK), 27.August 1991,

## Beschreibung

Gegenstand der Erfindung ist eine Beleuchtungsvorrichtung zum wahlweise verschiedenfarbigen Ausleuchten einer transparenten Fläche, insbesondere einer Flüssigkristall-Anzeigevorrichtung (LCD-Anzeige) mit einer Anzahl von getrennt einschaltbaren Lampen, die jeweils in einem einzelnen Reflektor angeordnet sind, der nach außen durch eine lichtdurchlässige Streuscheibe abgedeckt ist, wobei mehrere Streuscheiben eine Färbung aufweisen, die von der der benachbarten Streuscheiben unterschiedlich ist..

Solche Beleuchtungsvorrichtungen werden vor allem für Geräte mit Anzeigevorrichtungen für Meßwerte oder Zustandsgrößen, insbesondere im Bereich von Kraftfahrzeugen eingesetzt. Dabei sind diese Geräte überwiegend mit Flüssigkristall-Anzeigen (LCD-Anzeigen) ausgestattet, die zum Unterscheiden und Hervorheben von verschieden wichtigen Anzeigewerten mit unterschiedlichen Farben durchleuchtet bzw. beleuchtet werden.

Aber auch Anzeigefelder mit unveränderlichen Symbolen, z.B. Kontroll- oder Warnleuchten können auf diese Weise verschiedenfarbig beleuchtet werden.

Die WO 88/01399 betrifft ein Anzeigegerät auf mindestens einer Flüssigkristallzelle, wobei die Flüssigkristallzelle eine rückwärtige Beleuchtung aufweist, durch welche Bereiche mit unterschiedlicher Farbgebung, Schriften, Symbole bzw. Anzeigen ausgeleuchtet sind, wobei an der Rückseite einer transmissiven Flüssigkeitszelle die Bereiche mit unterschiedlicher Farbgebung durch Lichtschächte voneinander getrennt sind, in denen Lichtquellen entsprechend unterschiedlicher Farbe angeordnet sind, und wobei das farbige Licht der einen Lichtquelle von dem Bereich der Flüssigkeitskristalle für eine andere Farbgebung durch eine Trennwand abgeschirmt ist.

Die WO 88/03663 betrifft ein Anzeigegerät auf mindestens einer Flüssigkristallanzeige, wobei die Flüssigkristallzelle eine rückwärtige Ausleuchtung aufweist, durch welche Bereiche mit unterschiedlicher Farbgebung der Schriften, Symbole bzw. Anzeigen beleuchtet sind, wobei an der Rückseite einer transmissiven Flüssigkeitszelle mindestens einer der Bereiche mit unterschiedlicher Farbgebung einen über diesen Bereich reichenden Lichtleiter aufweist, der das farbige Licht einer an einen Endbereich des Lichtleiters angeordneten Lichtquelle an seiner zur Flüssigkristallzelle hingerichteten Oberfläche auskoppelt.

Patent Abstracts of Japan, Volume 15, Nr. 462 (P-1279) vom 22.11.1991, die Zusammenfassung der japanischen Offenlegungsschrift 03/196088 betrifft eine Vorrichtung mit einer Lichtquelle bei der die Illuminanz in der Weise vergleichsmäßig werden kann, daß eine diffundierende und transmittierende Platte eingesetzt wird, welche Teile aufweist, welche unterschiedliche Dicke besitzen, die dem Abstand von der Lichtquelle entsprechen. Hierdurch wird allerdings weder vorgeschrieben noch nahegelegt mehrere Streuscheiben mit einer solchen Färbung vorzusehen die von benachbarten Streuscheiben unterschiedlich ist.

Es sind weitere Vorrichtungen zum mehrfarbigen Beleuchten von Anzeigevorrichtungen bekannt. Bei diesen bekannten Beleuchtungsvorrichtungen werden entweder verschiedenartige Lampen mit verschiedenen Farben (DE-OS 28 20 896, DE-OS 36 27 697) oder verschiedenfarbige Farbfilter (GB 2 137 394), meist in Form kleiner Farbkappen, die über die Lampen montiert werden, verwendet.

Um eine gleichmäßige Ausleuchtung der Anzeigefläche zu erreichen und eine Spotbildung zu vermeiden ist der zusätzliche Einsatz einer Streuscheibe oder eines Transflektors erforderlich.

Bei den bisher bekannten mehrfarbigen Beleuchtungsvorrichtungen muß von den Firmen ein hoher Teileaufwand betrieben werden, da außer den Streuscheiben mehrere verschiedenfarbige Lampen bzw. verschiedenen Farbkappen oder Farbfilter benötigt werden. Für die Montage- und Kundendienstbereiche der Herstellfirmen ergeben sich dadurch hohe Lager- und Verwaltungskosten.

Außerdem verringern die Farbkappen, die unmittelbar über den Glaskolben der Lampen montiert werden, die Lebensdauer der Lampen.

Aufgabe der Erfindung ist es, eine Beleuchtungsvorrichtung der eingangs genannten Art zu schaffen, die bei einfacher Bauart und Montage mit wenigen Bauteilen eine gleichmäßige Ausleuchtung der auszuleuchtenden Fläche in verschiedenen Farben gewährleistet, wobei eine Beeinträchtigung der gewünschten Beleuchtungssfarbe verhindert wird.

Diese Aufgabe wird erfindungsgemäß dadurch gelöst, daß alle Streuscheiben zusammen einstückig ausgebildet sind, wobei die Streuscheiben zur auszuleuchtenden Fläche hin konvex gewölbt sind und einige oder alle Streuscheiben auf der der Lampe zugewandten Seite mit transparenter Farbe bedruckt sind..

Bei einfacher Konstruktion und Montage wird auf diese Weise die gleichmäßige Flächenausleuchtung wahlweise in verschiedenen Farben mit wenigen Standardbauteilen ermöglicht. Durch die Streuscheiben wird mit nur einem optischen Bauteil die Farbgebung der Beleuchtung erreicht und zugleich eine Spotbildung auf der auszuleuchtenden Fläche sicher verhindert.

Für die Herstellfirmen bedeutet das neben geringeren Produktionskosten vor allem geringere Lager- und Verwaltungskosten in den Montage- und Kundendienstbereichen. Dadurch daß keine Farbkappen auf den Glaskolben der Lampen verwendet werden, verringert sich die Lebensdauer der Lampen nicht.

Eine besonders scharfe Farbtrennung der Beleuchtung wird dadurch erreicht, daß der Brennpunkt jeder einzelnen Lampe weiter von der auszuleuchtenden Fläche entfernt ist als der Reflektorrand des um die Lampe angeordneten Reflektors.

Auch eine Bedruckung der Streuscheiben auf der der Lampe zugewandten Seite mit transparenter Farbe in der Art, daß die Streuscheiben auf der der Lampe zugewandten Seite eine erste, insbesondere milchig-weiße Farbschicht der gleichen Farbe aufweisen und eine bestimmte Anzahl von Streuscheiben auf dieser ersten Farbschicht eine zweite, von der ersten Farbschicht verschiedenfarbige, insbesondere rote Farbschicht hat, verhindert, daß eine Beeinträchtigung der gewünschten Beleuchtungsfarbe dadurch auftritt, daß Lichtstrahlen von den eingeschalteten Lampen durch benachbarte, anders gefärbte Streuscheiben hindurchgehen.

Wenn die Streuscheiben zur ausleuchtenden Fläche hin insbesondere halbkugelförmig gewölbt sind, kann eine gleichmäßige Ausleuchtung mit einfachen Standardlampen erreicht werden. Diese Gleichmäßigkeit der Ausleuchtung kann noch weiter gesteigert werden, wenn die Dicke jeder einzelnen Streuscheibe in ihrem Zentrum größer ist als in den äußeren, an den Reflektorrand angrenzenden Bereichen der Streuscheibe.

Besonders vorteilhaft für eine gleichmäßige Ausleuchtung ist es außerdem, wenn die der auszuleuchtenden Fläche zugewandte Seite jeder einzelnen Streuscheibe eine glatte, insbesondere polierte Oberfläche hat, und wenn die der Lampe zugewandte Seite jeder einzelnen Streuscheibe eine angerauhte, insbesondere geätzte oder erodierte Oberfläche aufweist.

Eine besonders günstige und einfach zu montierende Ausführungsform der Beleuchtungsvorrichtung ergibt sich, wenn alle Reflektoren zusammen einstückig ausgebildet sind.

Wenn die an den äußeren Bereichen der auszuleuchtenden Fläche angeordneten Reflektoren derart ausgebildet sind, daß die vom Zentrum der auszuleuchtenden Fläche abgewandten Reflektorwände an der auszuleuchtenden Fläche anliegen, wird verhindert, daß Lichtstrahlen an der auszuleuchtenden Fläche vorbeigehen oder störendes Licht von der Seite her einfällt, so daß eine optimale Beleuchtung in gewünschter Farbe und Helligkeit erfolgen kann.

Ein Ausführungsbeispiel der Erfindung ist in den Zeichnungen dargestellt und wird im folgenden näher beschrieben. Es zeigen:

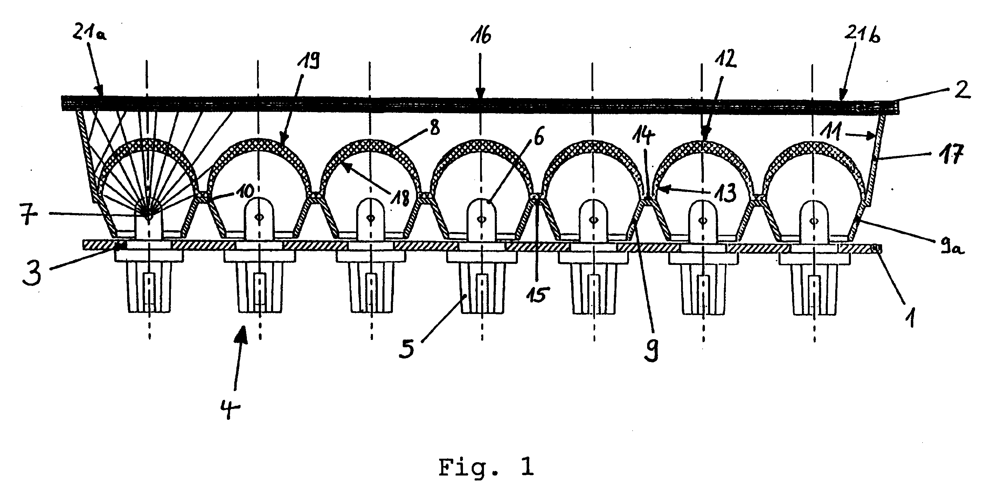

- Figur 1:: Eine Schnittansicht einer Beleuchtungsvorrichtung

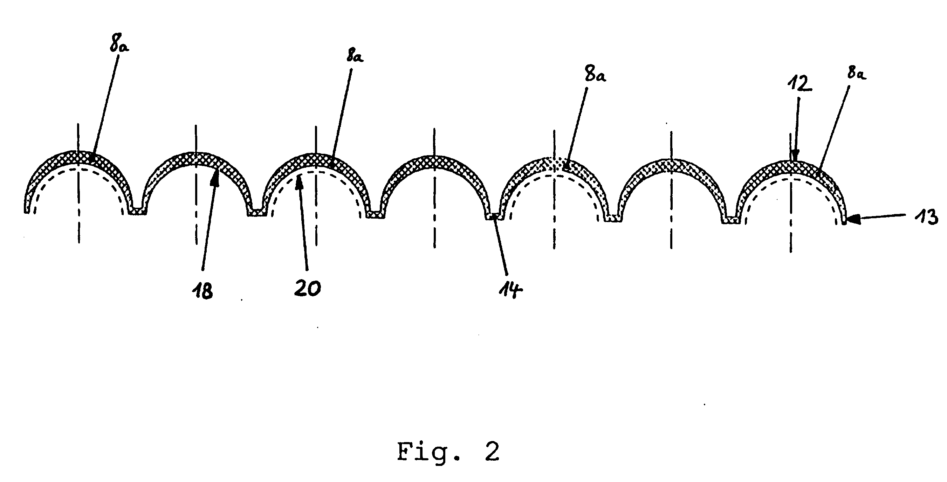

- Figur 2:: Ein Ausführungsbeispiel der Streuscheiben mit spezieller Farbgebung.

Die Beleuchtungsvorrichtung weist eine Leiterplatte 1 auf, die parallel zu einer LCD-Anzeige (auszuleuchtende Fläche) 2 angeordnet ist. Die Leiterplatte hat mehrere Bohrungen 3, in die jeweils eine Lampe 4 so eingesetzt ist, daß der Glaskolben 6 der Lampe 4 auf der der LCD-Anzeige 2 zugewandten Seite der Leiterplatte 1 sich befindet und die Fassung 5 der Lampe 4 auf der der LCD-Anzeige 2 abgewandten Seite der Leiterplatte 1 angeordnet ist. Die Lampen 4 sind durch eine entsprechende Steuerung einzeln oder in Gruppen ein- oder auszuschalten.

In dem dargestellten Ausführungsbeispiel sind sieben Lampen 4 geradlinig nebeneinander angeordnet, um eine optimale Beleuchtung der LCD-Anzeige 2 bei möglichst geringem Platzbedarf zu gewährleisten. Es sei jedoch darauf hingewiesen, daß je nach vorliegendem Anwendungsfall verschiedene Anzahlen von Lampen 4 in unterschiedlicher Anordnung, insbesondere in mehreren Richtungen nebeneinander auf der Leiterplatte 1 erforderlich sein können, um eine optimale Ausleuchtung der LCD-Anzeige 2 zu erreichen.

Um den Glaskolben 6 jeder Lampe 4 befindet sich ein Reflektor 9 mit reflektierenden Innenseiten, der die Lampen 4 voneinander abschirmt. Die Reflektoren 9 sind in dem gezeigten Ausführungsbeispiel zusammen einstückig ausgebildet, um die Montage durch Reduzierung der Teileanzahl zu vereinfachen.

An jedem Reflektor 9 ist an dem der LCD-Anzeige 2 zugewandten Reflektorrand 10 eine Streuscheibe 8 angeordnet, die in einer bestimmten transparenten Farbe gefärbt ist.

Durch das Einschalten einer oder mehrerer Lampen 4 wird die LCD-Anzeige 2 in der Farbe der an den eingeschalteten Lampen 4 angeordneten Streuscheiben 8 ausgeleuchtet.

In dem dargestellten Ausführungsbeispiel sind alle Streuscheiben 8 zusammen einstückig, insbesondere aus lichtdurchlässigem Kunststoff, als Spritzgußbauteil ausgebildet, um die Handhabung und die Montage durch den Einsatz weniger Bauteile zu vereinfachen.

Die durch die Ausbildung aller Streuscheiben 8 als ein Teil sich bildenden Stege 14 liegen an den durch die Ausbildung aller Reflektoren 9 als ein Teil an den Rändern 10 gebildeten Gehäusestege 15 an.

Die an den äußeren Bereichen 21a, 21b der LCD-Anzeige 2 angeordneten Reflektoren 9a sind derart ausgeformt, daß die vom Zentrum 16 der LCD-Anzeige 2 abgewandten Reflektorwände 17 an der auszuleuchtenden Fläche anliegen. An diese Reflektorwände 17 liegen außerdem die äußeren Streuscheiben 8 an, so daß dadurch die Lage der Streuscheiben 8 relativ zu den Reflektoren 9 fixiert ist.

Die Ränder 10 der Reflektoren 9 sind so hoch ausgeformt, daß sie näher an der LCD-Anzeige 2 liegen als die Brennpunkte 7 der Lampen 4. Damit wird verhindert, daß Lichtstrahlen seitlich zu den benachbarten Lampen 4 und Streuscheiben 8 austreten können und dadurch eine unbeabsichtigte Färbung der Beleuchtung auftritt, wenn die benachbarten Streuscheiben eine andere Farbe aufweisen.

Zusätzliche Sicherheit gegen eine unbeabsichtigte Färbung der Beleuchtung wird dadurch erreicht, daß bei dem beschriebenen Ausführungsbeispiel die Innenseite 18 aller Streuscheiben 8 zunächst mit einer milchig-weißen Farbschicht bedruckt ist. Auf diese erste Farbschicht ist bei jeder zweiten Streuscheibe 8a eine zweite, rot-transparente Farbschicht 20 gedruckt.

Werden die Lampen 4 unter diesen rot-bedruckten Streuscheiben 8a eingeschaltet, dann wird die LCD-Anzeige rot beleuchtet.

Sind hingegen nur Lampen 4 unter nicht rot-gefärbten Streuscheiben 8 eingeschaltet, so wird ein ungewollter rötlicher Farbschimmer durch benachbarte rot-gefärbte Streuscheiben 8a bei der Beleuchtung dadurch verhindert, daß von außen auf ein Streuscheibe 8 einfallende Lichtstrahlen größtenteils an der weißen Farbschicht reflektiert werden.

In weiteren Anwendungsfällen können auch andere oder zusätzliche Farben verwendet werden, um eine Beleuchtung der LCD-Anzeige 2 in mehreren verschiedenen Farben zu ermöglichen.

Dadurch daß die Streuscheiben 8 zu der Seite der LCD-Anzeige 2 hin annähernd halbkugelförmig konvex gewölbt ausgeführt sind, wird eine besonders gleichmäßige Ausleuchtung der LCD-Anzeige 2 erreicht.

Die Dicke jeder Streuscheibe 8 ist im Zentrum 12 größer als in den äußeren Bereichen 13, die an den Reflektorrand 10 angrenzen. Durch diese besondere Ausbildung der Streuscheiben 8 wird die Ausleuchtung der LCD-Anzeige noch gleichmäßiger.

Zusätzlich wird die Gleichmäßigkeit der Ausleuchtung der LCD-Anzeige 2 durch die Oberflächenstrukturen der Innenseiten 18 (den Lampen 4 zugewandt) und der Außenseiten 19 (der LCD-Anzeige 2 zugewandt) der Streuscheiben 8 erhöht.

Die Innenseite 18 der Streuscheiben 8 hat eine insbesondere durch Erodier- oder Ätzverfahren hergestellte rauhe Feinstruktur, damit die Lichtstrahlen aus möglichst vielen verschiedenen Richtungen in die Streuscheiben 8 eintreten.

Die Außenseite 19 der Streuscheiben 8 weist eine glatt-polierte Oberfläche auf, damit die Lichtstrahlen gleichmäßig verteilt radial nach außen in Richtung der LCD-Anzeige 2 aus den Streuscheiben austreten.

Durch die beschriebene Formgebung und Oberflächenausbildung der Streuscheiben 8 wird eine gleichmäßige Ausleuchtung der LCD-Anzeige 2 ohne Spotbildung insbesondere auch dann erreicht, wenn nur jede zweite Lampe 4 eingeschaltet ist.

## Patentansprüche

1. Beleuchtungsvorrichtung zum wahlweise verschiedenfarbigen Ausleuchten einer transparenten Fläche, insbesondere einer Flüssigkristall-Anzeigevorrichtung (LCD-Anzeige) mit einer Anzahl von getrennt einschaltbaren Lampen, die jeweils in einem einzelnen Reflektor angeordnet sind, der nach außen durch eine lichtdurchlässige Streuscheibe abgedeckt ist, wobei mehrere Streuscheiben (8) eine Färbung aufweisen, die von benachbarten Streuscheiben (8) unterschiedlich ist, **dadurch gekennzeichnet**, daß alle Streuscheiben (8) zusammen einstückig ausgebildet sind, wobei die Streuscheiben (8) zur auszuleuchtenden Fläche (2) hin konvex gewölbt sind und einige oder alle Streuscheiben (8) auf der der Lampe (4) zugewandten Seite (18) mit transparenter Farbe bedruckt sind.

2. Beleuchtungsvorrichtung nach Anspruch 1, **dadurch gekennzeichnet**, daß der Brennpunkt (7) jeder einzelnen Lampe (4) weiter von der auszuleuchtenden Fläche (2) entfernt ist als der Reflektorrand (10) des um die Lampe angeordneten Reflektors (9).

3. Beleuchtungsvorrichtung nach Anspruch 3, **dadurch gekennzeichnet**, daß die Streuscheiben (8) annähernd halbkugelförmig ausgebildet sind.

4. Beleuchtungsvorrichtung nach einem der vorherigen Ansprüche, **dadurch gekennzeichnet**, daß die Dicke jeder einzelnen Streuscheibe (8) in ihrem Zentrum (12) größer ist als in den äußeren, an den Reflektorrand (10) angrenzenden Bereichen (13) der Streuscheibe (8).

5. Beleuchtungsvorrichtung nach einem der vorherigen Ansprüche, **dadurch gekennzeichnet,** daß die der auszuleuchtenden Fläche (2) zugewandte Seite (19) jeder einzelnen Streuscheibe (8) eine glatte, insbesondere polierte Oberfläche hat.

6. Beleuchtungsvorrichtung nach einem der vorherigen Ansprüche, **dadurch gekennzeichnet**, daß die der Lampe (4) zugewandte Seite (18) jeder einzelnen Streuscheibe (8) eine angerauhte, insbesondere geätzte oder erodierte Oberfläche aufweist.

7. Beleuchtungsvorrichtung nach einem der vorherigen Ansprüche, **dadurch gekennzeichnet**, daß alle Streuscheiben (8) auf der der Lampe (4) zugewandten Seite (18) eine erste transparente, insbesondere milchig-weiße Farbschicht der gleichen Farbe aufweisen und eine bestimmte Anzahl von Streuscheiben (8a) auf dieser ersten Farbschicht eine zweite transparente, von der ersten Farbschicht verschiedenfarbige, insbesondere rote Farbschicht (20) hat.

8. Beleuchtungsvorrichtung nach einem der vorherigen Ansprüche, **dadurch gekennzeichnet**, daß alle Reflektoren (9) zusammen einstückig ausgebildet sind

9. Beleuchtungsvorrichtung nach einem der vorherigen Ansprüche, **dadurch gekennzeichnet**, daß die Reflektorseitenwand (17) des Raumes zwischen den Streuscheiben (8) und der auszuleuchtenden Fläche (2) einstückig mit den Reflektoren (9a) der äußeren Lampen (4) ausgebildet ist.

## Claims

1. An illumination apparatus for the optional varicoloured illumination of a transparent surface, in particular a liquid crystal display device (LCD display) having a number of lamps which can be switched on separately, which are each disposed in a single reflector, which is covered on the outside by a transparent diffusing lens, with several diffusing lenses (8) having a colouration which is different from adjoining diffusing lenses (8),
**characterised in that** all diffusing lenses (8) are constructed together in one piece, with the diffusing lenses (8) being convexly curved towards the surface to be illuminated (2) and some or all diffusing lenses (8) being printed with transparent colour on the side (18) faced towards the lamp.

2. An illumination apparatus according Claim 1,
**characterised in that** the focal point (7) of each individual lamp (4) is further from the surface to be illuminated (2) than the reflector edge (10) of the reflector (9) disposed around the lamp.

3. An illumination apparatus according to Claim 3,
**characterised in that** the diffusing lenses (8) have an approximately hemispherical construction.

4. An illumination apparatus according to one of the preceding Claims,
**characterised in that** the thickness of each individual diffusing lens (8) is greater in its centre (12) than in the outer regions (13) of the diffusing lens (8) adjacent to the reflector edge (10).

5. An illumination apparatus according to one of the preceding Claims,
**characterised in that** the side (19) of each individual diffusing lens (8) faced towards the surface to be illuminated (2) has a smooth, especially a polished, surface.

6. An illumination apparatus according to one of the preceding Claims,
**characterised in that** the side (18) of each individual diffusing lens (8) faced towards to the lamp (4) comprises a roughened, especially an etched or eroded surface.

7. An illumination apparatus according to one of the preceding Claims,
**characterised in that** all diffusing lenses (8) on the side (18) faced towards the lamp (4) comprise a first transparent, in particular milky-white, coloured coating of the same colour and a determined number of diffusing lenses (8a) on this first coloured coating has a second transparent coloured coating (20) a different colour from the first coloured coating, in particular red.

8. An illumination apparatus according to one of the preceding Claims,
**characterised in that** all reflectors (9) are constructed together in one piece.

9. An illumination apparatus according to one of the preceding Claims,
**characterised in that** the reflector side wall (17) of the space between the diffusing lenses (8) and the surface to be illuminated (2) is constructed in one piece with the reflectors (9a) of the outer lamps (4).

## Revendications

1. Dispositif d'éclairage en différentes couleurs au choix d'une surface transparente, en particulier d'un afficheur à cristaux liquides, comportant un certain nombre de lampes pouvant être allumées séparément qui sont placées chacune dans un réflecteur individuel qui est couvert vers l'extérieur par un disque diffuseur transparent, plusieurs disques diffuseurs (8) présentant une coloration différente de celle des disques diffuseurs (8) voisins, caractérisé par le fait que tous les disques diffuseurs (8) sont réunis en une seule pièce, les disques diffuseurs (8) étant convexes vers la surface à éclairer (2), et qu'une couleur transparente est appliquée sur la face (18) dirigée vers la lampe (4) de quelques disques diffuseurs (8) ou de tous.

2. Dispositif d'éclairage selon la revendication 1, caractérisé par le fait que le foyer (7) de chaque lampe (4) est plus éloigné de la surface à éclairer (2) que le bord (10) du réflecteur (9) placé autour de la lampe.

3. Dispositif d'éclairage selon la revendication 3, caractérisé par le fait que les disques diffuseurs (8) sont approximativement hémisphériques.

4. Dispositif d'éclairage selon l'une des revendications précédentes, caractérisé par le fait que l'épaisseur de chaque disque diffuseur (8) est plus grande au centre (12) que dans les parties extérieures (13) contiguës au bord (10) du réflecteur.

5. Dispositif d'éclairage selon l'une des revendications précédentes, caractérisé par le fait que la face (19) de chaque disque diffuseur (8) dirigée vers la surface à éclairer (2) est lisse, en particulier polie.

6. Dispositif d'éclairage selon l'une des revendications précédentes, caractérisé par le fait que la face (18) de chaque disque diffuseur (8) dirigée vers la lampe (4) a été rendue rugueuse, en particulier par attaque ou érosion.

7. Dispositif d'éclairage selon l'une des revendications précédentes, caractérisé par le fait que tous les disques diffuseurs (8) présentent sur leur face (18) dirigée vers la lampe (4) une première couche colorée transparente de la même couleur, en particulier blanc laiteux, et qu'un certain nombre de disques diffuseurs (8a) ont sur cette première couche colorée une deuxième couche colorée transparente (20) de couleur différente de celle de la première couche, en particulier rouge.

8. Dispositif d'éclairage selon l'une des revendications précédentes, caractérisé par le fait que tous les réflecteurs (9) sont réunis en une seule pièce.

9. Dispositif d'éclairage selon l'une des revendications précédentes, caractérisé par le fait que la paroi latérale de réflecteur (17) de l'espace entre les disques diffuseurs (8) et la surface à éclairer (2) fait corps avec les réflecteurs (9a) des lampes (4) extérieures.
